(19) Europäisches Patentamt / European Patent Office / Office européen des brevets

(11) **EP 3 363 099 B1**

(12) **FASCICULE DE BREVET EUROPEEN**

(45) Date de publication et mention
de la délivrance du brevet:
**04.11.2020 Bulletin 2020/45**

(21) Numéro de dépôt: **16775521.4**

(22) Date de dépôt: **20.09.2016**

(51) Int Cl.:
*H02K 1/14* *(2006.01)*          *H02K 1/27* *(2006.01)*
*H02K 16/04* *(2006.01)*         *H02K 11/33* *(2016.01)*
*H02K 7/14* *(2006.01)*

(86) Numéro de dépôt international:
**PCT/EP2016/072239**

(87) Numéro de publication internationale:
**WO 2017/063823 (20.04.2017 Gazette 2017/16)**

(54) **ACTIONNEUR ELECTROMECANIQUE POUR COMMANDES DE VOL ELECTRIQUES D'UN AERONEF**

ELEKTROMECHANISCHER STELLANTRIEB FÜR ELEKTRISCHE FLUGSTEUERUNG EINES FLUGZEUGS

ELECTROMECHANICAL ACTUATOR FOR ELECTRIC FLIGHT CONTROLS OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2015 FR 1502179**

(43) Date de publication de la demande:
**22.08.2018 Bulletin 2018/34**

(73) Titulaire: **Airbus Helicopters**
**13725 Marignane Cedex (FR)**

(72) Inventeurs:
• **ESTIVAL, Pierre**
  **31450 Noueilles (FR)**
• **GROHMANN, Boris**
  **81247 Munich (DE)**
• **MARGER, Thibaut**
  **46100 Beduer (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 543 589          WO-A1-2009/082808**
**DE-A1-102013 112 525     US-A1- 2005 052 080**
**US-A1- 2011 290 581**

• **J. R. Hendershot ET AL: "DESIGN OF BRUSHLESS PERMANENT-MAGNET MOTORS" In: "DESIGN OF BRUSHLESS PERMANENT-MAGNET MOTORS", 1 January 1994 (1994-01-01), Oxford University Press, United Kingdom, XP055406211, ISBN: 978-0-19-859389-8 pages 4-2,**

EP 3 363 099 B1

**Description**

La présente invention est du domaine des actionneurs électromécaniques. Elle concerne un actionneur électromécanique destiné plus particulièrement à être utilisé dans le cas des commandes de vol électriques des aéronefs. La présente invention concerne également un dispositif de commandes de vol électriques comprenant un tel actionneur électromécanique pilotant un actionneur hydraulique.

Un actionneur électromécanique transforme de l'énergie électrique en énergie mécanique. Les actionneurs électromécaniques sont des systèmes complexes regroupant diverses fonctions pour assurer cette transformation. Un actionneur électromécanique est composé d'un organe de conversion électromécanique, d'un moyen de traitement d'ordres de commande, d'un moyen électronique de puissance, d'un moyen électronique de commande et de surveillance, de capteurs afin d'assurer un pilotage correct de l'organe de conversion électromécanique et d'un étage de conditionnement de l'alimentation électrique.

Cette énergie mécanique est généralement fournie par un déplacement angulaire d'un arbre et caractérisée par une vitesse de rotation et un couple. Il s'agit alors plus précisément d'un organe de conversion électromécanique tournant. L'arbre peut avoir un débattement angulaire limité à quelques dizaines de degrés. L'arbre peut également avoir un débattement angulaire illimité et réaliser ainsi plusieurs rotations complètes. L'organe de conversion électromécanique est alors généralement désigné par l'expression « moteur électrique ». Dans ce cas, l'actionneur électromécanique peut comporter un étage de transformation mécanique afin de transformer le mouvement de rotation de l'organe de conversion électromécanique en mouvement de translation.

Cette énergie mécanique peut toutefois être fournie par un déplacement linéaire d'un axe et caractérisée par une vitesse de translation et une force, il s'agit alors plus précisément d'un organe de conversion électromécanique linéaire désigné également par l'expression « glissière électrique ». Le débattement linéaire de cet axe est limité par les dimensions de cet actionneur électromécanique linéaire.

L'énergie électrique alimentant un actionneur électromécanique, et plus précisément l'étage de conditionnement de l'alimentation électrique, peut être fournie par un courant électrique continu ou bien un courant électrique alternatif monophasé ou polyphasé, tel un courant électrique triphasé. En outre, un courant électrique alternatif triphasé peut être obtenu à partir d'une source de tension continue qui est découpée ou « hachée » par un moyen électronique de puissance pilotée par un moyen électronique de commande afin de créer une tension alternative et, par suite, un courant alternatif. Les tensions alimentant le moteur électrique sont déphasées l'une par rapport à l'autre de 120° afin de créer une alimentation triphasée.

Un organe de conversion électromécanique tournant comporte au moins un stator généralement fixe, au moins un rotor tournant par rapport à ce stator et qui peut être placé à l'intérieur ou à l'extérieur du stator ainsi qu'un entrefer séparant un stator d'un rotor. La rotation de ce rotor est générée par l'interaction entre deux champs magnétiques attachés respectivement à ce stator et à ce rotor, créant un couple magnétique au rotor. On parle alors respectivement d'un « champ magnétique statorique » et d'un « champ magnétique rotorique ».

L'entrefer est formé par un volume d'air dans lequel transitent les flux magnétiques entre le rotor et le stator. La longueur de l'entrefer est une caractéristique ayant une influence sur les performances de l'organe de conversion électromécanique. En effet, il est connu que l'augmentation du couple moteur d'un organe de conversion électromécanique est obtenue par la réduction de la distance entre le rotor et le stator, cette distance correspondant à la longueur de son entrefer.

On connait cependant le document FR 1149195 qui décrit des perfectionnements pour des moteurs électriques utilisés principalement dans l'horlogerie. Un des perfectionnements est l'augmentation de l'entrefer entre le rotor et le stator ce qui permet, contrairement aux règles connues à l'époque, l'augmentation de la puissance magnétique lorsque les flux magnétiques sont réduits. Cela permet aussi de réduire les flux antagonistes dus aux variations de la reluctance des circuits magnétiques. De plus, l'augmentation de l'entrefer permet une fabrication plus facile.

L'actionneur électromécanique selon l'invention est particulièrement destiné à être utilisé dans le cas de commandes de vol électriques d'un aéronef. Dans cette application particulière désignée en langue anglaise par l'expression « Fly-By-Wire », un débattement angulaire de l'arbre d'un actionneur électromécanique est généralement transformé en mouvement de translation par une chaîne de transmission mécanique afin de piloter un actionneur hydraulique. Par suite, l'arbre de l'actionneur électromécanique n'a pas besoin de faire plusieurs tours autour de son axe de rotation, son débattement angulaire peut donc être limité. De fait, dans un souci de simplification, on utilisera plus simplement pour la suite de cette description l'expression « actionneur électromécanique » pour désigner un tel actionneur électromécanique tournant. De même, l'expression « organe de conversion électromécanique » est utilisée pour désigner un tel organe de conversion électromécanique tournant.

Le document EP 2543589 décrit des commandes de vol primaires pour un rotor principal et pour un rotor de queue d'un aéronef à voilure tournante avec une interface électromécanique entre les commandes électriques et les actionneurs d'asservissement hydraulique afin de commander la force d'amplification pilotant le rotor principal et/ou le rotor de queue. L'interface électromécanique comporte un moteur électrique et un système d'embiellage mécanique permettant au moteur électrique de piloter une servocommande hydraulique et, par suite, les actionneurs d'asservissement hydraulique pour chaque axe de contrôle du rotor principal et du rotor de queue. Ce système est applicable sur les aéronefs existants pour remplacer les dispositifs électromécaniques utilisés. De plus, grâce à un système d'embiellage mécanique sans organe de réduction de vitesse entre le moteur électrique et la servocommande hydraulique, le moteur électrique peut être déplacé et déporté, facilitant ainsi son intégration dans l'aéronef. Des organes de réduction de vitesse utilisés traditionnellement sont par exemple un réducteur à engrenages et un train épicycloïdal.

Parmi les organes de conversion électromécanique les plus utilisés, on connait le moteur sans balai, également dénommé « moteur brushless » ou bien désigné par l'acronyme « BLDC ».

Le rotor d'un moteur sans balai comporte un ou plusieurs aimants permanents alors que le stator comporte des aimants non permanents, appelés plus communément électro-aimants. Ces électro-aimants sont constitués généralement par un ou plusieurs enroulements de conducteurs électriques autour d'un matériau ferromagnétique alimentés en courant électrique continu. On utilisera par la suite le terme « bobinage » pour désigner un tel ensemble d'un ou plusieurs enroulements de conducteurs électriques. Un moteur sans balai dispose généralement d'un capteur permettant de connaître la position du rotor ainsi que d'un système électronique de commande assurant la commutation du courant électrique alternatif alimentant les bobinages du stator. Ainsi, le système électronique de commande permet d'assurer l'orientation et le sens du champ magnétique statorique par rapport au champ magnétique rotorique, et par suite la rotation du rotor par rapport au stator.

De plus, au sein de chaque bobinage du stator, un ou plusieurs enroulements peuvent être regroupés afin de former différentes phases du stator. Chaque phase du stator est alimentée par une phase d'un courant électrique alternatif polyphasé et génère respectivement un champ magnétique statorique. Les champs magnétiques statoriques, lorsqu'ils sont issus d'un même courant électrique polyphasé, s'additionnent pour former un unique champ magnétique statorique tournant, appelé résultante statorique. Cette résultante statorique entraine alors en rotation le champ rotorique et, par suite, crée une rotation et un couple du rotor par rapport au stator.

Parmi les actionneurs électromécaniques à courant électrique alternatif, on peut distinguer les machines synchrones et asynchrones.

Les machines synchrones, dont fait partie le moteur sans balai, utilisent un décalage de quatre-vingt-dix degrés (90°) magnétique entre le champ tournant et le champ fixe. De cette manière, la position du rotor est toujours assurée précisément. Par ailleurs, la fréquence de rotation du rotor d'une machine synchrone est proportionnelle à la fréquence du courant électrique alternatif alimentant le stator.

Les machines asynchrones disposent d'un rotor comportant un bobinage dont les enroulements sont en court-circuit et un stator comportant un bobinage constituant des aimants non permanents. De fait, lorsque le bobinage de ce stator est traversé par un courant électrique alternatif, il crée un champ magnétique statorique tournant dont la résultante statorique entraine l'apparition d'une variation de flux magnétique. Une force électromotrice induite apparaît et crée des courants rotoriques dans le bobinage du rotor. Ces courants sont responsables de l'apparition d'un couple. Un décalage entre le champ statorique qui est tournant par rapport au stator et le champ rotorique qui est fixe par rapport à l'arbre de rotation du rotor apparait. L'inconvénient d'une machine asynchrone est le décalage en position, également appelé glissement, créé entre le champ statorique et le champ rotorique. La précision de positionnement de l'arbre du rotor est donc soumise au couple résistant appliqué sur l'arbre de la machine. De plus, la fréquence de rotation du rotor d'une machine asynchrone n'est pas obligatoirement proportionnelle à la fréquence du courant électrique alternatif, une vitesse de glissement pouvant apparaître entre le rotor et le champ magnétique statorique. Ce type de machine asynchrone est en général utilisé pour des applications à vitesse constante et couple quasi constant.

Par ailleurs, les moteurs électriques sans balai à aimants permanents synchrones peuvent se classer dans deux grandes catégories, les moteurs à flux trapézoïdal et les moteurs à flux sinusoïdal.

Un moteur à flux trapézoïdal possède une force électromotrice de type trapézoïdal lorsqu'il est utilisé comme générateur électrique. Cette forme trapézoïdale de la force électromotrice est obtenue par l'utilisation d'un rotor à pôles lisses, la longueur de l'entrefer étant constante. Cette longueur de l'entrefer ne variant pas, l'induction d'entrefer reste constante le long d'un pôle et s'inverse lorsque le pôle magnétique change. La pente du trapèze est due à la distance entre deux pôles magnétiques.

Un moteur à flux sinusoïdal possède une force électromotrice de type sinusoïdal lorsqu'il est utilisé comme générateur électrique. Cette forme sinusoïdale est obtenue par la mise en place d'un rotor à pôles magnétiques saillants dont la forme se rapproche d'une fonction sinusoïdale. La longueur d'entrefer qui est alors variable est un acteur important de l'induction d'entrefer qui induit la forme de la force électromotrice. Ainsi, afin de créer un couple maximum en fonctionnement moteur, les courants électriques utilisés sont de formes sinusoïdales. De plus, un tel moteur à flux sinusoïdal possède généralement un faible couple d'encoche.

On connait notamment le document WO 2014/056773 qui décrit un actionneur électromécanique équipé d'un rotor dont les pôles sont formés par des aimants permanents. Les pôles du rotor comportent au moins quatre zones ayant des propriétés magnétiques différentes disposées symétriquement vis-à-vis d'un centre du pôle. La surface des aimants permanents est configurée afin que le bord d'un pôle soit moins haut que le milieu de ce pôle. Par suite, un flux magnétique de distribution sensiblement sinusoïdale apparaît dans l'actionneur électromécanique.

De même, le document EP 2378634 décrit un actionneur électromécanique, tel un générateur d'électricité, comportant des aimants permanents dont la section dans un plan perpendiculaire à l'axe de rotation de l'actionneur électromécanique est de forme sinusoïdale. Par suite, cette forme sinusoïdale de l'aimant permanent permet de créer une induction d'entrefer sinusoïdale et l'apparition d'une distribution du flux magnétique sensiblement sinusoïdale.

En outre, plusieurs architectures de bobinages sont possibles pour des moteurs sans balai synchrones.

Tout d'abord, le bobinage peut être distribué ou bien concentrique. Avec un bobinage concentrique, chaque dent bobinée du stator est entourée par un conducteur électrique dans lequel circule une seule phase du courant électrique alimentant ce moteur. Avec un bobinage distribué, chaque dent bobinée du stator est entourée par au moins deux conducteurs électriques dans lesquels circulent au moins deux phases de ce courant électrique. Un bobinage concentrique présente des avantages de sécurité évitant qu'une surchauffe d'un conducteur d'une phase ne se répande à d'autres phases. Par contre, un bobinage distribué permet la création d'un champ magnétique statorique spécifique en fonction du nombre de spire par encoche, et, par suite, la création un champ statorique total sinusoïdale.

Ensuite, les bobinages concentriques peuvent être à simple couche ou bien à double couche. Un bobinage à simple couche utilise seulement la moitié des dents du stator, un bobinage entourant une dent alors que les dents adjacentes sont laissées libres, c'est-à-dire sans bobinage. A contrario, un bobinage à double couche utilise toutes les dents qui sont bobinées. Un bobinage à simple couche permet d'avoir une section d'encoche faible pour un nombre de conducteurs important. Un bobinage à simple couche permet également d'éloigner les bobinages entre eux, limitant ainsi leurs interactions. Par contre, les bobinages à double couche comportent un nombre de spires deux fois plus faible par dent pour créer le même couple qu'un bobinage simple couche. Chaque dent est ainsi plus facile à bobiner pour un coût plus faible. En revanche, les bobinages à double couche entrainent un effet d'inductance mutuelle entre les différentes phases de la machine et un risque de propagation d'un défaut d'une dent sur une dent adjacente.

Enfin, il est connu que les matériaux ferromagnétiques utilisés dans les organes de conversion électromécanique présentes trois caractéristiques distinctes dans leur utilisation comme porteur de flux magnétique. Ces trois caractéristiques sont définies par une courbe de variation de l'induction magnétique de ce matériau en fonction de son champ magnétique coercitif. Cette courbe se compose d'une première partie linéaire caractérisée par la perméabilité magnétique de ce matériau ferromagnétique, une deuxième partie formée par un coude de saturation et une troisième partie linéaire caractérisée par la perméabilité magnétique de l'air.

Dans la grande majorité des cas, le matériau ferromagnétique est utilisé dans la première partie linéaire de cette courbe afin d'éviter toute saturation du matériau. En effet, en cas de saturation magnétique du matériau, le flux magnétique atteint sa valeur maximum et ne peut plus augmenter, le couple fourni par l'organe de conversion électromécanique ne peut plus augmenter non plus.

Toutefois, on connait le document US 2015/0054380 qui décrit un actionneur électromécanique destiné en particulier à équiper un véhicule hybride ou un véhicule électrique. Cet actionneur électromécanique comporte des fentes ou bien des trous entre chaque dent de son stator et/ou à proximité de chaque pôle magnétique de son rotor. Une saturation du flux magnétique circulant dans cet actionneur électromécanique apparait alors au niveau de ces fentes permettant de réduire les ondulations du couple fourni par cet actionneur électromécanique.

On connait également les documents DE 10 2013 112525 et US 2005/0052080 qui décrivent des actionneurs électromécaniques comportant plusieurs organes de conversion électromécanique destinés à la motorisation d'un véhicule.

Notamment selon le document DE 10 2013 112525, un actionneur électromécanique comporte deux organes de conversion électromécanique alimentés par deux chaînes de pilotage. Chaque organe de conversion électromécanique est constitué par un stator coopérant avec un rotor commun.

De plus, selon le document US 2005/0052080, un actionneur électromécanique comporte plusieurs organes de conversion électromécanique isolés entre eux afin d'éliminer les interférences électriques et électromécaniques. Par exemple, un actionneur électromécanique comporte cinq organes de conversion électromécanique.

Par ailleurs, le document WO 2009/082808 décrit un actionneur électromécanique segmenté distribué, tel un moteur-générateur, comportant d'une part une pluralité de paires de segments formant un stator, chaque segment étant muni d'un bobinage et d'autre part plusieurs segments munis d'au moins un aimant permanent formant un rotor. Les paires de segments du stator peuvent être connectées entre elles pour former un groupe de segments constituant ainsi un organe de conversion électromécanique.

Enfin, on connait le document US 2011/0290581 qui décrit un actionneur électromécanique comportant un stator muni de douze dents et un rotor muni de dix pôles séparés les uns des autres par un espace. Les pôles ont une forme sinusoïdale.

En outre, l'art antérieur comporte le document « Design for Brushless Permanent Magnet Motors » de J.R Hendershot, janvier 1994. Ce document décrit le fonctionnement magnétique à l'intérieur d'un organe de conversion électromécanique et en particulier au niveau d'une dent et de l'entrefer. Ce document précise notamment que l'acier n'a pas une capacité illimitée permettant la circulation d'un flux magnétique et, qu'à partir d'une certaine densité de flux (1.6-1.7T), sa perméabilité chute rapidement.

Selon ce document, il est nécessaire de s'assurer que la densité du flux magnétique reste en dessous de ce niveau correspondant à la saturation magnétique de l'acier afin d'éviter toute dégradation du fonctionnement du moteur électrique. De plus, les pertes magnétiques dans le noyau, particulièrement au niveau du stator, augmentent rapidement pour ces valeurs importantes de la densité de flux.

Dans le cadre d'une application pour les commandes de vol, les actionneurs électromécaniques sont soumis à plusieurs contraintes de fonctionnement. Une première contrainte est une sécurisation du fonctionnement des commandes de vol en cas de panne sur un actionneur électromécanique alors qu'une seconde contrainte est un volume et une masse réduite pour permettre son intégration dans un aéronef. Pour répondre à cette première contrainte de sécurisation, la redondance des équipements est une voie mise en œuvre aujourd'hui. Le cœur d'un actionneur électromécanique, pour la partie puissance, réside dans le couple rotor-stator. Toutefois, la mise en place d'une redondance de ce couple rotor-stator impose un encombrement et une pénalité de masse qui est alors contraire à la seconde contrainte.

Une redondance est également possible au niveau des bobinages du stator, comme décrit dans le document FR 2493059. Ce moteur électrique comporte un rotor avec des aimants permanents, un stator avec des bobinages redondants et quatre pôles magnétiques. Les bobinages étant redondants, le moteur peut fonctionner malgré une panne sur un enroulement. Ce moteur peut servir aussi bien à des jouets qu'à déplacer des gouvernes d'un aéronef.

La présente invention a alors pour objet de proposer un actionneur électromécanique permettant de s'affranchir des limitations mentionnées ci-dessus afin de garantir une sécurisation de son fonctionnement tout en optimisant sa masse et son encombrement. Ce problème est résolu par un actionneur électromécanique selon la revendication 1.

Selon l'invention, un actionneur électromécanique comporte un arbre de transmission muni d'un axe de rotation, au moins un organe de conversion électromécanique, muni d'un stator et d'un rotor solidaire de l'arbre de transmission et tournant autour de cet axe de rotation, et au moins une chaîne de pilotage. Le stator est muni de dents et de bobinages, chaque bobinage entourant au moins une dent, alors que le rotor est muni d'aimants permanents ayant respectivement un pôle magnétique nord et un pôle magnétique sud.

Le rotor tourne de préférence à l'intérieur du stator afin de limiter l'encombrement de chaque organe de conversion électromécanique et, par suite, de l'actionneur électromécanique. Cependant, le rotor peut être situé à l'extérieur du stator.

Chaque chaîne de pilotage comporte tous les éléments permettant l'alimentation, la commande et le pilotage d'un organe de conversion électromécanique.

Chaque chaîne de pilotage comporte par exemple un moyen de traitement d'ordres de commande, un moyen électronique de puissance, un moyen électronique de commande et de surveillance, des capteurs et un étage de conditionnement de l'alimentation électrique.

L'actionneur électromécanique selon l'invention est notamment destiné aux dispositifs de commandes de vol électriques des aéronefs et notamment des aéronefs à voilures tournantes.

L'actionneur électromécanique selon l'invention est remarquable en ce qu'il comporte au moins trois organes de conversion électromécanique et au moins trois chaînes de pilotage, une chaîne de pilotage étant reliée à un seul organe de conversion électromécanique et alimentant l'organe de conversion avec un courant électrique alternatif.

Chaque chaîne de pilotage alimente ainsi un seul organe de conversion avec un courant électrique alternatif qui peut être monophasé ou bien polyphasé.

L'actionneur électromécanique selon l'invention assure de cette façon une redondance d'une part au niveau des organes de conversion électromécanique et d'autre part au niveau des chaînes de pilotage, une chaîne de pilotage étant dédiée à un seul organe de conversion électromécanique.

L'aspect de redondance est primordial pour assurer une continuité de fonctionnement des organes de conversion électromécanique en cas de pannes d'un ou plusieurs organes de conversion électromécanique. Ainsi, en cas d'une panne affectant un organe de conversion ou bien une chaîne de pilotage, l'actionneur peut toujours fonctionner grâce aux autres organes de conversion électromécanique et aux autres chaînes de pilotage qui sont non impactés par cette panne et restent donc fonctionnels.

En outre, afin de réduire l'encombrement et la masse de l'actionneur électromécanique selon l'invention, au moins deux organes de conversion électromécanique peuvent comporter un rotor commun. Le rotor commun coopère ainsi avec les stators de ces au moins deux organes de conversion électromécanique.

Par exemple, deux organes de conversion électromécanique, alimentés par un courant électrique alternatif triphasé, comporte un rotor commun et leur stators respectifs, constitués chacun de trois phases, coopèrent avec ce rotor commun. Ainsi, ces deux stators sont assemblés pour former avec ce rotor commun une architecture hexaphasée.

En outre, les stators coopérant avec un rotor commun peuvent être isolés magnétiquement par une séparation radiale amagnétique. La mise en place de cette zone fortement amagnétique au sein de la culasse statorique des stators permet un découplage magnétique important entre ces stators évitant ainsi toute perturbation entre eux. Cette séparation radiale amagnétique peut se trouver entre deux dents des stators sous la forme d'un morceau de la culasse statorique, cette culasse statorique supportant notamment les dents des deux stators. Une telle séparation radiale amagnétique entraine une baisse non significative des performances des organes de conversion électromécanique.

De plus, afin d'optimiser l'encombrement et la masse de l'actionneur électromécanique selon l'invention, chaque organe de conversion électromécanique comporte de préférence un rotor avec des aimants permanents à concentration de flux. Les aimants permanents sont disposés de telle sorte qu'ils fournissent une concentration de flux dans l'entrefer, permettant ainsi de maximiser le couple de cet organe de conversion électromécanique. En conséquence, pour un couple prédéterminé à fournir par l'organe de conversion électromécanique, l'utilisation d'aimants permanents à concentration de flux permet d'optimiser les dimensions de l'organe de conversion électromécanique et, par suite, son encombrement et sa masse. L'utilisation d'aimants permanents à concentration de flux peut également permettre d'utiliser des aimants permanents moins performants et, par suite, moins coûteux.

Par ailleurs, afin de limiter les risques de pannes de l'actionneur électromécanique selon l'invention, chaque organe de conversion électromécanique utilise de préférence des bobinages concentriques simple couche. De la sorte, les interactions entre les bobinages sont limitées. En conséquence, un incident sur un de ces bobinages, telle une surchauffe d'un conducteur, ne se propagera pas aux autres bobinages limitant ainsi l'effet de cet incident.

Une autre cause de pannes est le grippage d'un organe de conversion électromécanique par l'apparition par exemple d'un corps étranger entre le rotor et le stator. L'utilisation d'un entrefer important, par rapport à l'entrefer généralement utilisé sur des machines électriques équivalentes, permet d'inhiber ce risque de grippage et de garantir ainsi une continuité de fonctionnement de l'organe de conversion électromécanique. L'entrefer d'un organe de conversion électromécanique est de préférence supérieur à 1 millimètre (mm). Par exemple, l'entrefer est compris entre 1 et 2 mm.

Avantageusement, l'utilisation d'un entrefer important permet également de diminuer les couples parasites, tels qu'un couple d'encoche et un couple réluctant, qui peuvent créer des perturbations sur le couple développé par l'organe de conversion électromécanique. De plus, l'utilisation d'un entrefer important permet de réduire les tolérances de fabrication des composants du rotor et du stator, entrainant une baisse du coût de fabrication de ces composants.

En outre, les pôles magnétiques de chaque organe de conversion électromécanique peuvent être fractionnés ou bien intégraux. L'utilisation de pôles magnétiques fractionnés permet de diminuer le couple d'encoche présent dans l'organe de conversion électromécanique, mais en contre partie, crée des perturbations, notamment sur le courant électrique. L'utilisation de pôles magnétiques intégraux permet au contraire de réduire l'apparition de telles perturbations.

Un organe de conversion électromécanique est à pôles magnétiques fractionnés lorsque le rapport $\frac{N_d.N_{ph}}{N_p}$ est différent d'un nombre entier, $N_p$ étant le premier nombre total de paires de pôles magnétiques, $N_d$ étant le second nombre total des dents et $Nph$ étant le nombre de phases du courant électrique alternatif alimentant l'organe de conversion électromécanique.

A contrario, un organe de conversion électromécanique est à pôles magnétiques intégraux lorsque ce rapport $\frac{N_d.N_{ph}}{N_p}$ est égal à un nombre entier.

On parle alors de machines à bobinage fractionnaire pour les organes de conversion électromécanique à pôles magnétiques fractionnés et machines à bobinage intégral pour les organes de conversion électromécanique à pôles magnétiques intégraux.

Par ailleurs, les pôles magnétiques du rotor peuvent être saillants et avoir une forme sinusoïdale afin qu'un flux magnétique sinusoïdal circule dans chaque organe de conversion électromécanique.

Dans le cas particulier d'une panne de type court-circuit sur un bobinage, un couple résistant important, appelé « couple de court-circuit » apparaît dans l'organe de conversion électromécanique subissant cette panne jusqu'à ce que l'alimentation de cet organe de conversion électromécanique soit coupée. Ce couple de court-circuit bloque ainsi la rotation du rotor de cet organe de conversion électromécanique. Des dispositifs de débrayage peuvent être utilisés afin désolidariser cet organe de conversion électromécanique en panne des autres organes de conversion électromécanique de l'actionneur électromécanique et d'éviter ainsi un blocage de l'actionneur électromécanique et, par suite, une perte de fonction.

Cependant, l'utilisation de tels dispositifs de débrayage au sein d'un actionneur électromécanique augmente alors l'encombrement et la masse de l'actionneur électromécanique.

Afin d'éviter l'utilisation de dispositifs de débrayage au sein d'un actionneur électromécanique selon l'invention, les dents de chaque stator sont dimensionnées afin que chaque organe de conversion électromécanique fonctionne proche de sa zone de saturation. Selon l'invention, chaque organe de conversion électromécanique fonctionne au niveau du coude de saturation de la courbe de variation de l'induction magnétique du matériau ferromagnétique constituant ces dents.

En effet, un organe de conversion électromécanique fonctionne généralement loin de sa zone de saturation. Ainsi, le flux magnétique circulant dans chaque dent du stator et dans les pôles magnétiques du rotor peut augmenter permettant également une augmentation du couple fourni par cet organe de conversion électromécanique. Par contre, en cas de court-circuit sur un bobinage de cet organe de conversion électromécanique, le couple de court-circuit consécutif à ce court-circuit est beaucoup plus important que le couple nominal de cet organe de conversion électromécanique.

Par contre, pour chaque organe de conversion électromécanique de l'actionneur électromécanique selon l'invention fonctionnant proche de sa zone de saturation, le couple nominal fourni ne peut pas beaucoup augmenter, le flux magnétique atteignant rapidement sa circulation maximum dès qu'il y a saturation au niveau du rotor et/ou du stator. En conséquence, le couple de court-circuit d'un organe de conversion électromécanique subissant une panne de type court-circuit est alors faiblement supérieur au couple nominal de cet organe de conversion électromécanique. Ce couple de court-circuit d'un organe de conversion électromécanique représente par exemple 125% de son couple nominal.

Selon l'invention, deux organes de conversion électromécanique permettent alors de pallier une panne de type court-circuit d'un organe de conversion électromécanique, un des deux organes de conversion électromécanique compensant la majorité, voire la totalité, du couple de court-circuit de l'organe de conversion électromécanique en panne alors que l'autre fournit le couple nominal nécessaire au fonctionnement de l'actionneur électromécanique.

Un tel fonctionnement de chaque organe de conversion électromécanique permet ainsi d'exploiter au maximum l'induction du matériau ferromagnétique constituant les dents et la culasse statorique et/ou du matériau ferromagnétique constituant les pôles magnétiques du rotor. Ces matériaux ferromagnétiques sont alors utilisés dans l'ensemble de la première partie linéaire ainsi que dans le coude de saturation de leur courbe de variation de l'induction magnétique. Une valeur maximum de cette induction, située dans ce coude de saturation, est fixée afin d'éviter d'atteindre une saturation totale de ce matériau ferromagnétique.

Le dimensionnement de chaque organe de conversion électromécanique est déduit des valeurs d'induction souhaitées dans les lieux clés du stator, au niveau des dents et de la culasse statorique, ou bien du rotor, ces valeurs d'induction souhaitées étant les plus proches possibles du coude de saturation de la courbe de variation de l'induction magnétique.

Ainsi, les dimensions du stator peuvent être définies afin que la saturation apparaisse au niveau du stator. Dans ce but, les dimensions du stator sont réduites vis-à-vis d'un organe de conversion électromécanique fonctionnant traditionnellement, réduisant avantageusement l'encombrement et la masse de chaque organe de conversion électromécanique.

De même, les dimensions du rotor peuvent également être définies afin que la saturation apparaisse au niveau du rotor, principalement pour un rotor à concentration de flux ou bien un rotor à aimants enterrés.

En conséquence, les dimensions importantes au niveau du stator sont les dimensions des dents ou bien celles de la culasse statorique afin que la saturation apparaisse respectivement au niveau de ces dents ou bien au niveau de la culasse statorique. Les dimensions importantes au niveau du rotor à optimiser sont les dimensions des pôles magnétiques ou bien celles de l'armature du rotor afin que la saturation apparaisse respectivement au niveau de ces pôles magnétiques ou bien au niveau de l'armature du rotor.

Par exemple, dans le cas où la culasse statorique est réalisée à partir de tôles laminées et empilées, la largeur $l_d$ des dents et la hauteur $h_{cs}$ de la culasse statorique sont définies par les formules suivantes : $l_d = \frac{B_g.T_d}{B_{max}.K_{fe}}$ et

$h_{cs} = \frac{\Phi_g}{B_{max}.L_{st}.K_{st}}$, $T_d$ étant la longueur axiale d'une dent exprimée en mètre (m), $B_g$ étant l'induction d'entrefer en fonctionnement nominal exprimée en Tesla (T), $K_{fe}$ étant un coefficient de foisonnement, $B_{max}$ étant la valeur maximum de cette induction d'entrefer exprimée en Tesla, $\Phi_g$ étant le flux d'entrefer sur un pôle rotorique en fonctionnement nominal exprimé en Weber (Wb), $L_{st}$ étant la longueur axiale de l'organe de conversion électromécanique exprimée en mètre et $K_{st}$ étant un coefficient de tôles laminées.

Le coefficient de foisonnement est un coefficient qui tient compte de l'espace entre les tôles laminées avec lesquelles est fabriqué le stator et de prendre en compte une incertitude sur la longueur complète de l'organe de conversion électromagnétique due à la précision de fabrication. Le coefficient de tôles laminées, désigné en langue anglaise par l'expression « stacking factor », permet de prendre en compte la variation de l'aire de l'ensemble des tôles pour le calcul des flux magnétiques.

Par exemple, dans le cas où le matériau ferromagnétique utilisé pour fabriquer la culasse statorique et les dents est un alliage Fer-Silicium, la valeur maximum $B_{max}$ de cette induction est égale à 2.1 T. Ainsi, dans un mode de réalisation préféré de l'invention, la largeur $l_d$ des dents est égale à 4.4 mm et leur hauteur $h_{cs}$ est égale à 4 mm pour une longueur axiale $T_d$ d'une dent de 8.8mm, une induction d'entrefer $B_g$ de 1.09 T, un coefficient de foisonnement $K_{fe}$ de 1.04, un flux d'entrefer $\Phi_g$ de 0.000248 Wb et une longueur axiale $L_{st}$ de l'organe de conversion électromécanique de 33 mm et un coefficient de tôles laminées $K_{st}$ de 0.9.

Par ailleurs, il est possible de déterminer le premier nombre total $N_p$ de paires de pôles magnétiques du rotor et le second nombre total $N_d$ des dents du stator qui permettent d'une part de répondre aux contraintes de fabrication d'un tel organe de conversion électromécanique et d'autre part d'optimiser le fonctionnement de cet organe de conversion électromécanique.

Ce calcul est effectué pour un mode de réalisation préféré d'un actionneur électromécanique selon l'invention dont chaque organe de conversion électromécanique est un moteur « brushless » synchrone triphasé à rotor à aimants permanents et à concentration de flux, à pôle fractionnaire, à bobinages concentriques simple couche et de périodicité de rang deux.

Ce mode de réalisation préféré impose les hypothèses suivantes.

Tout d'abord, chaque bobinage est à simple couche. De fait, une dent sur deux étant non bobinée, chaque organe de conversion électromécanique comporte au moins deux dents par phase du courant électrique d'alimentation ou bien est proportionnel à deux fois le nombre de phases, tel que $N_d = 2.q.N_{ph}$, $q$ étant un nombre entier positif.

Le courant électrique d'alimentation étant triphasé, $N_{ph} = 3$, et par suite, le second nombre total $N_d$ des dents est tel que $N_d = 2.3.$ $q = 6.$ $q$.

De plus, chaque bobinage est concentrique à simple couche qui se traduit par le fait que l'entier le plus proche du résultat du rapport $\frac{N_d}{2.N_p}$, désigné par exemple $round\left(\frac{N_d}{2.N_p}\right)$, est un nombre impair. En effet, chaque bobinage entoure une dent située entre une encoche paire et une encoche impaire, une encoche étant l'espace situé entre deux dents adjacentes.

Chaque organe de conversion électromécanique est à pôles fractionnés, ce qui correspond à un rapport $\frac{N_d.N_{ph}}{N_p}$ différent d'un nombre entier, donc $\frac{N_d.N_{ph}}{N_p} \notin \mathbb{N}$.

Chaque organe de conversion électromécanique a une périodicité de rang deux.

La périodicité d'une machine permet de décomposer la machine en une machine élémentaire et à son concepteur d'étudier simplement la machine élémentaire, puis d'appliquer la périodicité. Dans le cas d'une machine électrique, le schéma magnétique et électrique de la machine se répète selon cette périodicité, le premier nombre total $N_p$ de paires de pôles magnétiques du rotor et le second nombre total $N_d$ des dents du stator étant liés par le rang de cette périodicité.

De fait, pour un rang deux, on peut étudier une moitié de chaque organe de conversion électromécanique suivant un axe de symétrie. On en déduit que le plus grand diviseur commun aux premier nombre de pôles et au second nombre de dents est ce rang de périodicité tel que $PGCD\left(\frac{N_d}{2}, N_p\right) = 2$

On en déduit $N_d = 4.x$ et $N_p = 2.y$, $x$ et $y$ étant des entiers positifs. Ces équations signifient que l'on peut trouver deux axes de symétrie pour chaque organe de conversion électromécanique qui peut donc être séparé en quatre machines élémentaires.

On prend également comme hypothèses que le premier nombre total $N_p$ de paires de pôles magnétiques du rotor est inférieur au second nombre total $N_d$ des dents du stator et que le premier nombre total $N_p$ de paires de pôles magnétiques du rotor est inférieur ou égal à 20. Ces hypothèses s'expriment alors telles que $N_p < N_d$ et $N_p \leq 20$.

En posant ensuite que q= $2.z$ pour $z$ entier positif, ce qui traduit l'aspect fractionnaire de chaque organe de conversion électromécanique qui veut que le nombre de dents par pôle et par phase $\frac{N_d.N_{ph}}{N_p}$ soit non entier, on peut écrire $N_d = 2.2.3.z$ et en déduire que :

$$\frac{N_d.N_{ph}}{N_p} = \frac{2.2.3.3.z}{2.y} \notin \mathbb{N}.$$

En sachant par ailleurs que $N_d = 4.x = 2.3.q$, on peut écrire :

$$z = \frac{x}{3}.$$

On en déduit que $y \notin \{1;2;3;6;9;18;z;2.z;3.z;6.z;9.z;18.z\}$, $N_p \notin \{2;4;6;12;18;2.z;4.z;6.z;18.z\}$. et $N_d \notin \{N_p;2.N_p;3.N_p;6.N_p;9.N_p\}$.

On peut alors conclure que $N_p \in \{8;10;14;16;20\}$ et que $N_d$ est un multiple de 12, le courant électrique d'alimentation étant triphasé.

Par ailleurs, on sait que l'entier le plus proche du rapport $\frac{N_d}{2.N_p}$, est un nombre impair.

On pose *(2n-1)* comme étant un nombre impair pour tout entier positif *n* et la différence

$$\frac{N_d}{2.N_p} - (2.n - 1)$$

est alors comprise dans un intervalle fixé entre -½ et ½.

On peut alors écrire

$$-\frac{1}{2} < \frac{N_d}{2.N_p} - (2.n - 1) < \frac{1}{2},$$

puis en conclure que (4*n* - 3).$N_p$ < $N_d$ < (4*n* - 1).$N_p$.

En conséquence, le premier nombre total $N_p$ de paires de pôles magnétiques du rotor doit d'une part appartenir à l'intervalle {8;10;14;16;20} et résoudre simultanément le second nombre total $N_d$ des dents du stator l'inéquation (4*n* - 3).$N_p$ < $N_d$ < (4*n* - 1).$N_p$, *n* étant un entier positif et le second nombre total $N_d$ des dents étant un multiple de 12.

Nous présentons ci-dessous un tableau récapitulatif en fonction des hypothèses prises, les croix correspondant aux couples formés par le premier nombre total $N_p$ de paires de pôles magnétiques et le second nombre total $N_d$ satisfaisant les conditions précédentes énoncées.

|  |  | Np | | | | |
|---|---|---|---|---|---|---|
|  |  | 8 | 10 | 14 | 16 | 20 |
| Nd | 12 | x | x | - | - | - |
|  | 24 | - | x | x | x | x |
|  | 36 | - | - | x | x | x |
|  | 48 | - | - | - | - | x |
|  | 60 | - | - | - | - | - |
|  | 72 | - | - | x | - | - |
|  | 84 | x | - | - | - | - |
|  | 96 | - | x | x | - | - |

On choisit de préférence pour notre application, le premier nombre total $N_p$ de paires de pôles magnétiques égale à 10 et le second nombre total $N_d$ des dents du stator égale à 24.

Selon une autre hypothèse, chaque organe de conversion électromécanique est à pôles intégraux à bobinage concentrique simple couche, ce qui correspond alors à un rapport $\frac{N_d.N_{ph}}{N_p}$ égal à un nombre entier, donc $\frac{N_d.N_{ph}}{N_p} \in \mathbb{N}$.

On peut alors en déduire que $N_p \in$ {2;4;6;8;10;12;14;16;18;20}. On a alors le tableau récapitulatif suivant pour les couples formés par un premier nombre total $N_p$ de paires de pôles magnétiques et un second nombre total $N_d$.

| | | Np | | | | | | | | | |
|---|---|---|---|---|---|---|---|---|---|---|---|
| | | 2 | 4 | 6 | 8 | 10 | 12 | 14 | 16 | 18 | 20 |
| Nd | 12 | x | - | x | - | - | - | - | - | - | - |
| | 24 | - | x | - | - | - | x | - | - | x | - |
| | 36 | x | - | x | - | - | - | - | - | x | - |
| | 48 | - | - | - | x | - | - | - | - | x | - |
| | 60 | x | - | x | - | x | - | - | - | - | - |
| | 72 | - | x | - | - | - | x | - | - | - | - |
| | 84 | x | - | x | - | - | - | x | - | - | - |
| | 96 | - | - | - | - | - | - | - | x | x | - |

Par ailleurs une telle inéquation peut être déterminée pour d'autres modes de réalisation d'un actionneur électromécanique selon l'invention en modifiant certaines hypothèses.

Par exemple, dans le cas d'une machine triphasé double couche à pôles intégraux ou fractionnaires, on obtient l'inéquation $\left(\frac{4}{3}n - 1\right).N_p < N_d < \left(\frac{4}{3}n - \frac{2}{6}\right).N_p$ que doivent respecter les couples formés par le premier nombre total $N_p$ de paires de pôles magnétiques et le second nombre total $N_d$ de dents.

De manière analogue, dans le cas d'une machine biphasé simple couche à pôles intégraux ou fractionnaires, l'inéquation devient $(2n - 3).N_p < N_d < (2n - 1).N_p$.

La présente invention a aussi pour objet un dispositif de commandes de vol électriques pour un aéronef, par exemple un aéronef à voilure tournante, comportant un actionneur électromécanique, un actionneur hydraulique et une chaîne de transmission mécanique pour chaque axe de pilotage de l'aéronef.

Chaque actionneur électromécanique a la charge de transformer un ordre électrique émanant d'un dispositif de contrôle de vol de l'aéronef en un ordre mécanique. Cet ordre mécanique de faible puissance est transmis, via une chaîne de transmission mécanique, vers les servocommandes hydrauliques et transformé en ordre mécanique de forte puissance.

Chaque actionneur électromécanique comporte les caractéristiques de la revendication 1 et donc en particulier au moins trois organes de conversion électromécanique et au moins trois chaines de pilotage, chaque chaîne de pilotage pilotant l'alimentation et le fonctionnement d'un organe de conversion électromécanique.

Chaque chaîne de pilotage comporte tous les éléments permettant l'alimentation, la commande et le pilotage d'un organe de conversion électromécanique.

Chaque chaîne de pilotage comporte par exemple un moyen de traitement d'ordres de commande électrique du dispositif de contrôle de vol, un moyen électronique de puissance, un moyen électronique de commande et de surveillance de l'organe de conversion électromécanique, des capteurs et un étage de conditionnement de l'alimentation électrique.

Afin de réduire son encombrement et sa masse, la chaîne de transmission mécanique ne comporte aucun organe de réduction de vitesse. La chaîne de transmission mécanique est par exemple un système bielle-manivelle de faible masse comportant une bielle et une manivelle et permettant de transmettre les mouvements d'un actionneur électromécanique vers un levier d'entrée d'un actionneur hydraulique. L'actionneur électromécanique peut ainsi être installé sur un emplacement ségrégé de l'actionneur hydraulique, par exemple dans un environnement peu ou pas agressif pour l'actionneur électromécanique tel que sous un plancher ou dans une cabine de l'aéronef.

L'invention et ses avantages apparaîtront avec plus de détails dans le cadre de la description qui suit avec des exemples de réalisation donnés à titre illustratif en référence aux figures annexées qui représentent :

- la figure 1, un dispositif de commandes de vol électriques pour un aéronef,
- la figure 2, un premier mode de réalisation des organes de conversion électromécanique d'un actionneur électromécanique selon l'invention,
- la figure 3, une vue partielle d'un organe de conversion électromécanique,
- les figures 4 et 5, un second mode de réalisation d'un organe de conversion électromécanique, et
- la figure 6, des courbes de variation de l'induction magnétique dans un matériau ferromagnétique en fonction de son champ magnétique coercitif.

Les éléments présents dans plusieurs figures distinctes sont affectés d'une seule et même référence.

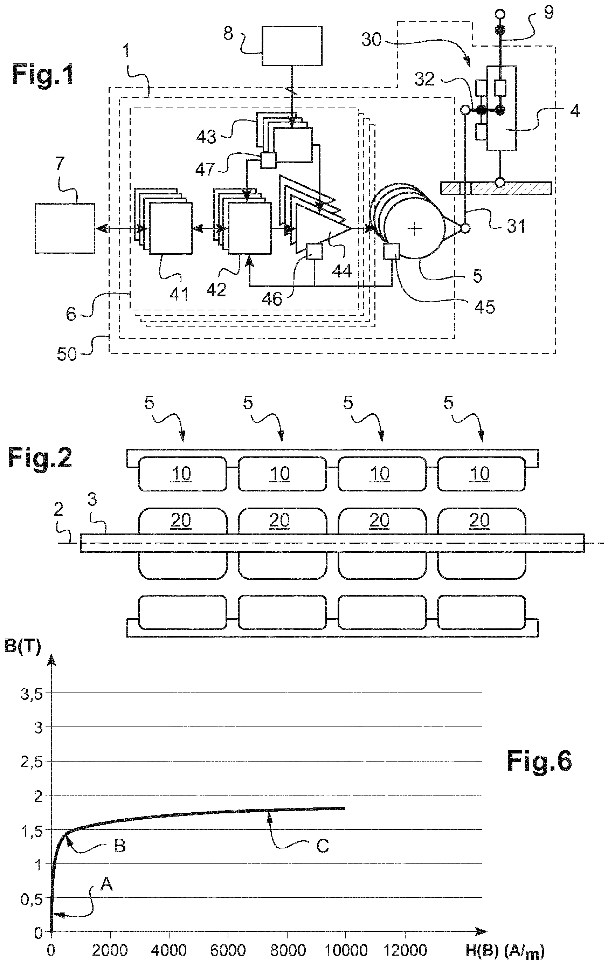

La figure 1 représente un dispositif de commandes de vol électriques 50 pour aéronef permettant de commander chaque axe de pilotage de l'aéronef. Un tel dispositif de commandes de vol électriques 50 est notamment destiné à piloter les variations de pas collectif et cyclique des pales d'un rotor principal d'un aéronef à voilure tournante ainsi que les variations notamment du pas collectif des pales de son rotor anticouple.

Ce dispositif de commandes de vol électriques 50 comporte un actionneur électromécanique 1, un actionneur hydraulique 4 et une chaîne de transmission mécanique 30. La chaîne de transmission mécanique 30 est un système bielle-manivelle comportant une bielle 31 et une manivelle 32 qui permet de transmettre les mouvements de l'actionneur électromécanique 1 vers un levier d'entrée de l'actionneur hydraulique 4, ce levier d'entrée étant solidaire de la manivelle 32.

Chaque actionneur électromécanique 1 reçoit un ordre de commande électrique émanant d'un dispositif de contrôle de vol 7 de l'aéronef et le transforme en un ordre de commande mécanique de faible puissance qui est transmis par l'intermédiaire de la chaîne de transmission mécanique 30 à l'actionneur hydraulique 4. L'actionneur hydraulique 4 peut alors fournir un ordre de commande mécanique de forte puissance par l'intermédiaire des déplacements de la tige 9 vers un axe de pilotage de l'aéronef.

Chaque actionneur électromécanique 1 comporte quatre organes de conversion électromécanique 5 et quatre chaines de pilotage 6, chaque chaîne pilotage 6 pilotant l'alimentation électrique et le fonctionnement d'un organe de conversion électromécanique 5. Ainsi, une redondance aussi bien au niveau de la chaîne pilotage 6 qu'au niveau de l'organe de conversion électromécanique 5 permet de pallier tout type de pannes pouvant affecter l'actionneur électromécanique 1 et garantit ainsi une fiabilité de fonctionnement de l'actionneur électromécanique 1.

Chaque chaîne de pilotage 6 comporte un moyen de traitement 41 des ordres de commande électriques du dispositif de contrôle de vol 7, un moyen électronique de commande et de surveillance 42 de l'organe de conversion électromécanique 5, un moyen électronique de puissance 44, des capteurs 45,46,47 et un étage de conditionnement 43 de l'alimentation électrique. Par ailleurs, l'actionneur électromécanique 1 est relié à un dispositif d'alimentation électrique 8 qui fournit une tension continue. Le moyen électronique de puissance 44 permet de transformer la tension continue en une tension alternative triphasée. Toutefois, le moyen électronique de puissance 44 peut également être un circuit purement résistif passe bas, filtrant par exemple les hautes fréquences, le dispositif d'alimentation électrique 8 fournissant directement une tension électrique alternative triphasée.

La figure 2 représente un premier mode de réalisation des quatre organes de conversion électromécanique 5 de l'actionneur électromécanique 1. Les organes de conversion électromécanique 5 comportent un axe de rotation 2 et un arbre de transmission 3 communs. De plus, chaque organe de conversion électromécanique 5 comporte un stator 10 et un rotor 20, le rotor 20 tournant autour de l'axe de rotation 2 et à l'intérieur du stator 10.

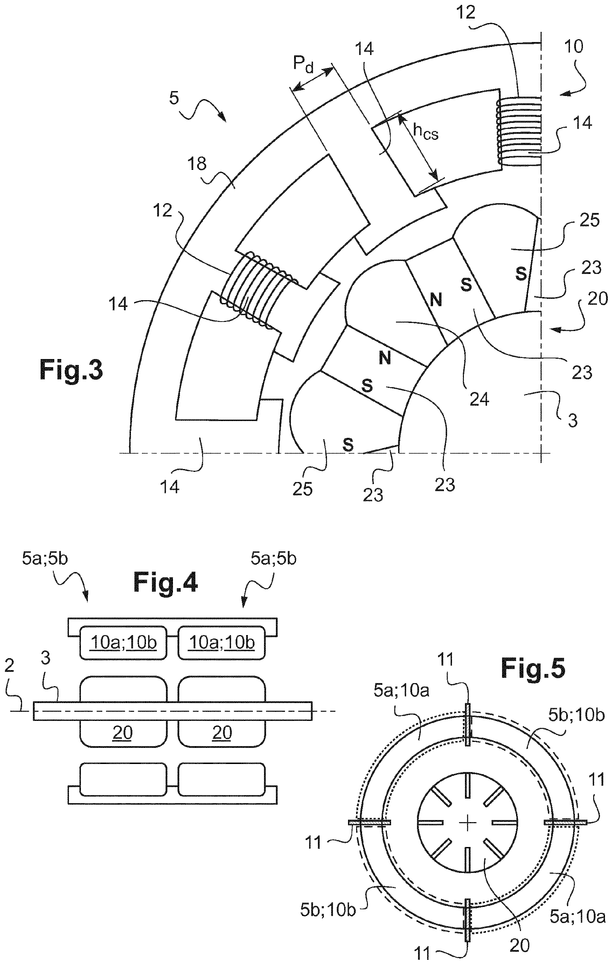

La figure 3 représente une vue partielle d'un organe de conversion électromécanique 5.

Le rotor 20, solidaire de l'arbre de transmission 3, comporte des aimants permanents 23 dont respectivement les pôles nord se font face deux à deux et les pôles sud se font face deux à deux. Cette disposition particulière des aimants permanents 23 caractérise un rotor 20 à concentration de flux. Un pôle magnétique nord 24 apparait ainsi entre deux aimants 23 dont les pôles nord se font face. De même, un pôle magnétique sud 25 apparait entre deux aimants 23 dont les pôles sud se font face.

Le stator 10 comporte des dents 14, une culasse statorique 18 et des bobinages 12. Une dent 14 sur deux est entourée par un bobinage 12, caractérisant un bobinage à simple couche. Ainsi, chaque dent 14 bobinée est encadrée par deux dents sans bobinage.

Les dents 14, la culasse statorique 18 ainsi que les pôles magnétiques 24,25 sont réalisées en matériau ferromagnétique, par exemple en tôles en alliage Fer-Silicium laminées et empilées.

En outre, les pôles magnétiques 24,25 du rotor 20 sont saillants et ont une forme sensiblement sinusoïdale qui fait face aux dents 14 du stator 10. Les organes de conversion électromécanique 5 sont ainsi à flux magnétique sinusoïdal. L'entrefer de chaque organe de conversion électromécanique 5 est ainsi variable entre une dent 14 d'un stator 10 et un pôle magnétique 24,25 d'un rotor 20. Cet entrefer varie par exemple d'une valeur minimale e, égale à 1 mm, à une valeur maximale e', égale à 2 mm. Cet entrefer important permet avantageusement de garantir une fiabilité de fonctionnement de l'actionneur électromécanique 1 en réduisant, voire éliminant, le risque de blocage de chaque organe de conversion électromécanique 5 par l'apparition d'un corps étranger dans cet entrefer.

Par ailleurs, les dents 14 du stator 10 ont été dimensionnées afin que, selon les caractéristiques magnétiques du matériau ferromagnétique constituant ces dents 14, chaque organe de conversion électromécanique 5 fonctionne proche de sa limite de saturation.

Une courbe de variation de l'induction magnétique d'un matériau ferromagnétique en fonction de son champ magnétique coercitif est représentée sur la figure 6. L'induction magnétique du matériau ferromagnétique, désignée généralement par « B » et exprimée en Tesla (T), est en ordonnée alors que le champ magnétique coercitif, désigné généralement par « H(B) » et exprimé en Ampère par mètre (A/m), est en abscisse.

Cette courbe est spécifique pour chaque matériau et comporte trois caractéristiques distinctes caractérisant trois comportements différents de ce matériau.

Une première partie linéaire A correspond à la zone d'utilisation habituelle d'un matériau ferromagnétique dans un organe de conversion électromécanique. Cette première partie linéaire A est une droite de coefficient directeur égal à la perméabilité magnétique de ce matériau ferromagnétique.

Une deuxième partie coudée B correspondant à un début de saturation du matériau. Cette deuxième partie coudée B constitue un coude de saturation de ce matériau ferromagnétique.

Une troisième partie linéaire C correspond à une zone de saturation totale du matériau ferromagnétique. Cette troisième partie linéaire C est une droite de coefficient directeur égal à la perméabilité magnétique de l'air. Cette troisième partie linéaire C est donc de direction identique quelque soit le matériau. Cette troisième partie linéaire C ne constitue pas une zone de fonctionnement nominal d'un organe de conversion électromécanique. Cependant, suite à une panne de type court-circuit de cet organe de conversion électromécanique, il y a saturation magnétique du matériau et le flux circulant dans ce matériau est déterminé par cette troisième partie linéaire C.

Avantageusement, chaque organe de conversion électromécanique 5 fonctionnant proche ou au niveau du coude de saturation B de cette courbe de variation de l'induction magnétique, il n'y a qu'une faible augmentation du flux magnétique et, par suite, du couple de l'organe de conversion électromécanique 5, en cas d'une panne de type court-circuit.

De la sorte, parmi les quatre organes de conversion électromécanique 5 que comporte l'actionneur électromécanique 1, un organe de conversion électromécanique 5 permet de compenser le couple de court-circuit qui apparait au niveau d'un organe de conversion électromécanique 5 subissant une panne de type court-circuit. En conséquence, deux organes de conversion électromécanique 5 restent disponibles pour fournir le couple nécessaire au fonctionnement de l'actionneur mécanique 1.

Par ailleurs, ce couple de court-circuit disparaît dès que, suite à la détection de cette panne, l'alimentation de l'organe de conversion électromécanique 5 subissant cette panne est coupée par la chaîne de pilotage 6 correspondante.

Les dimensions des dents 14 ont donc été définies afin que, selon les caractéristiques magnétiques du matériau ferromagnétique constituant ces dents 14, chaque organe de conversion électromécanique 5 fonctionne proche de ce coude de saturation B, voire dans ce coude de saturation B. Dans le cas où les dents 14 et la culasse statorique 18 sont réalisées à partir de tôles laminées et empilées, la largeur $l_d$ des dents 14 et la hauteur $h_{cs}$ de la culasse statorique 18 sont définies respectivement par les formules $l_d = \dfrac{B_g.T_d}{B_{max}.K_{fe}}$ et $h_{cs} = \dfrac{\Phi_g}{B_{max}.L_{st}.K_{st}}$, $T_d$ étant la longueur axiale d'une dent exprimée en mètre (m), $B_g$ étant l'induction d'entrefer en fonctionnement nominal exprimée en Tesla (T), $K_{fe}$ étant un coefficient de foisonnement, $B_{max}$ étant la valeur maximum de cette induction exprimée en Tesla, $\Phi_g$ étant le flux d'entrefer sur un pôle rotorique en fonctionnement nominal exprimé en Weber (Wb), $L_{st}$ étant la longueur axiale de l'organe de conversion électromécanique exprimée en mètre et $Kst$ étant un coefficient de tôles laminées.

Enfin, le premier nombre total $N_p$ de paires de pôles magnétiques 24,25 du rotor 20 et le second nombre total $N_d$ des dents 14 du stator 10 d'un organe de conversion électromécanique 5 répondent à la formule $(4n - 3).N_p < N_d < (4n - 1).N_p$, $n$ étant un nombre entier positif. Cette formule correspond notamment à un organe de conversion électromécanique de type moteur « brushless » à aimants permanents à concentration de flux et à bobinage simple couche à courant électrique triphasé.

Un second mode de réalisation des quatre organes de conversion électromécanique 5 de l'actionneur électromécanique 1 est représenté sur les figures 4 et 5. Les quatre organes de conversion électromécanique 5 sont assemblés par paire et chaque paire d'organes de conversion électromécanique 5a,5b comporte un rotor 20 commun. De plus, afin d'obtenir un fonctionnement équilibré, chaque organe de conversion électromécanique 5a,5b comporte un stator 10a,10b en deux parties, ces deux parties étant diamétralement opposées comme représenté sur la figure 5.

Le rotor 20 commun coopère ainsi simultanément avec les deux stators 10a,10b que comportent respectivement les deux organes de conversion électromécanique 5a,5b.

Par ailleurs, chaque chaîne de pilotage 6 alimentant un organe de conversion électromécanique 5 avec un courant électrique alternatif triphasé, chaque paire d'organes de conversion électromécanique 5a,5b constitue alors avec le rotor 20 commun une architecture hexaphasée formée par l'assemblage de deux organes de conversion électromécanique 5a,5b triphasés.

Cette architecture hexaphasée a été conçue dans le but de maintenir un équilibre magnétique. Elle peut alors être pilotée par un système triphasé classique comme une commande par « Modulation de Largeur d'Impulsion » désignée par l'acronyme « MLI », cette commande pouvant être pilotée par un autopilotage des courants statoriques dans le plan de Park.

En outre, des séparations radiales amagnétiques 11 permettent d'isoler magnétiquement entre eux les stators 10a,10b de cette architecture hexaphasée. Ces séparations radiales amagnétiques 11 permettent ainsi d'éviter l'apparition de fuites magnétiques entre ces stators 10a,10b ainsi que toute perturbation magnétique entre eux.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

**1.** Actionneur électromécanique (1) pour commandes de vol électriques d'un aéronef comportant :

- un arbre de transmission (3) muni d'un axe de rotation (2),
- au moins trois organes de conversion électromécanique (5) munis respectivement d'un stator (10) et d'un rotor (20) solidaire dudit arbre de transmission (3) et tournant autour dudit axe de rotation (2), ledit stator (10) étant muni de dents (14) et de bobinages (12), chaque bobinage (12) entourant au moins une dent (14), ledit rotor (20) étant muni d'aimants permanents (23) ayant respectivement un pôle magnétique nord (24) et un pôle magnétique sud (25),
- au moins trois chaînes de pilotage (6), chaque chaîne de pilotage (6) assurant l'alimentation et la commande d'un organe de conversion électromécanique (5), une chaîne de pilotage (6) étant reliée à un seul organe de conversion électromécanique (5) et alimentant ledit organe de conversion (5) avec un courant électrique alternatif,

**caractérisé en ce que** lesdites dents (14) sont dimensionnées afin que chaque organe de conversion électromécanique (5) fonctionne au niveau du coude de saturation d'une courbe de variation de l'induction magnétique du matériau ferromagnétique constituant lesdites dents (14), permettant ainsi qu'au moins deux desdits organes de conversion électromécanique (5) pallient une panne de type court-circuit d'un autre organe de conversion électromécanique (5), un desdits deux organes de conversion électromécanique (5) compensant la majorité, voire la totalité, du couple de court-circuit dudit organe de conversion électromécanique (5) en panne alors que l'autre desdits deux organes de conversion électromécanique (5) fournit le couple nominal nécessaire au fonctionnement dudit actionneur électromécanique (1).

**2.** Actionneur électromécanique (1) selon la revendication 1,
**caractérisé en ce que**, chaque stator (10) comportant une culasse statorique (18) et dans le cas où chaque culasse statorique (18) est réalisée à partir de tôles laminées empilées, la largeur $l_d$ desdites dents (14) et la hauteur $h_{cs}$ de ladite culasse statorique (18) sont définies par les formules suivantes :

$$l_d = \frac{B_g.T_d}{B_{max}.K_{fe}} \quad \text{et} \quad h_{cs} = \frac{\Phi_g}{B_{max}.L_{st}.K_{st}},$$

$T_d$ étant une longueur axiale d'une dent (14), $B_g$ étant l'induction d'entrefer en fonctionnement nominal, $K_{fe}$ étant un coefficient de foisonnement, $B_{max}$ étant une valeur maximum de ladite induction, $\Phi_g$ étant un flux d'entrefer sur un pôle (24,25) en fonctionnement nominal, $L_{st}$ étant une longueur axiale dudit organe de conversion électromécanique (5) et $K_{st}$ étant un coefficient de tôles laminées.

**3.** Actionneur électromécanique (1) selon l'une quelconque des revendications 1 à 2,
**caractérisé en ce que** chaque bobinage (12) est simple couche, lesdites dents (14) adjacentes à une dent (14) entourée par un bobinage (12) n'étant pas entourées par un bobinage.

**4.** Actionneur électromécanique (1) selon l'une quelconque des revendications 1 à 3,
**caractérisé en ce que** chaque organe de conversion électromécanique (5) est à concentration de flux magnétique.

**5.** Actionneur électromécanique (1) selon l'une quelconque des revendications 1 à 4,
**caractérisé en ce que** chaque chaîne de pilotage (6) alimentant un organe de conversion électromécanique (5) avec un courant électrique polyphasé, chaque bobinage (12) est concentrique, chaque dent (14) étant entourée par un bobinage (12) dans lequel circule une seule phase dudit courant électrique polyphasé.

**6.** Actionneur électromécanique (1) selon l'une quelconque des revendications 1 à 5,
**caractérisé en ce que**, chaque chaîne de pilotage (6) alimentant un organe de conversion électromécanique (5)

avec un courant électrique alternatif triphasé, deux organes de conversion électromécanique (5a,5b) comporte un rotor (20) commun, ledit rotor (20) commun coopérant avec les stators (10a,10b) desdits deux organes de conversion électromécanique (5a,5b), lesdits stators (10a,10b) desdits deux organes de conversion électromécanique (5a,5b) étant assemblés pour constituer avec ledit rotor (20) commun une architecture hexaphasée.

**7.** Actionneur électromécanique (1) selon l'une quelconque des revendications 1 à 5,
**caractérisé en ce qu'**au moins deux organes de conversion électromécanique (5) comportent un rotor (20) commun, ledit rotor (20) commun coopérant avec lesdits stators (10) desdits au moins deux organes de conversion électromécanique (5).

**8.** Actionneur électromécanique (1) selon l'une quelconque des revendications 6 à 7,
**caractérisé en ce que** lesdits stators (10) coopérant avec ledit rotor (20) commun sont isolés magnétiquement l'un de l'autre par une séparation radiale amagnétique (11).

**9.** Actionneur électromécanique (1) selon l'une quelconque des revendications 1 à 8,
**caractérisé en ce que** chaque stator (10) est séparé d'un rotor (20) par un entrefer supérieur à 1 mm.

**10.** Actionneur électromécanique (1) selon la revendication 9, **caractérisé en ce que** ledit entrefer est compris entre 1 et 2 mm.

**11.** Actionneur électromécanique (1) selon l'une quelconque des revendications 1 à 10,
**caractérisé en ce que** lesdits pôles magnétiques (24,25) ont une forme sinusoïdale afin qu'un flux magnétique sinusoïdal circule dans chaque organe de conversion électromécanique (5).

**12.** Actionneur électromécanique (1) selon l'une quelconque des revendications 1 à 11,
**caractérisé en ce que** le premier nombre total $N_p$ de paires de pôles magnétiques (24,25) et le second nombre total $Nd$ desdites dents (14) sont tels que $(4n - 3).N_p < N_d < (4n - 1).N_p$, $n$ étant un nombre entier positif.

**13.** Dispositif de commandes de vol électriques (50) comportant :

- au moins un actionneur électromécanique (1),
- au moins un actionneur hydraulique (4),
- au moins une chaîne de transmission mécanique (30), chaque chaîne de transmission mécanique (30) permettant à un actionneur électromécanique (1) de piloter un actionneur hydraulique (4),

**caractérisée en ce que** chaque actionneur électromécanique (1) est selon l'une quelconque des revendications 1 à 12.

**14.** Dispositif de commandes de vol électriques (50) selon la revendication 13,
**caractérisé en ce que** chaque chaîne de transmission mécanique (30) ne comporte aucun organe de réduction de vitesse.

**15.** Dispositif de commandes de vol électriques (50) selon l'une quelconque des revendications 13 à 14,
**caractérisé en ce que** chaque chaîne de transmission mécanique (30) est un système bielle-manivelle comportant une bielle (31) et une manivelle (32).


**Patentansprüche**

**1.** Elektromechanisches Stellglied (1) für elektrische Flugsteuerungen eines Flugzeugs, umfassend:

- eine Antriebswelle (3) mit einer Drehachse (2),
- mindestens drei elektromechanische Wandlerelemente (5), die jeweils mit einem Stator (10) und einem fest mit der Antriebswelle (3) verbundenen und um die Drehachse (2) rotierenden Rotor (20) versehen sind, wobei der Stator (10) mit Zähnen (14) und Wicklungen (12) versehen ist, wobei jede Wicklung (12) mindestens einen Zahn (14) umgibt, wobei der Rotor (20) mit Permanentmagneten (23) versehen ist, die jeweils einen magnetischen Nordpol (24) und einen magnetischen Südpol (25) aufweisen,
- mindestens drei Steuerketten (6), wobei jede Steuerkette (6) ein elektromechanisches Wandlerelement (5) versorgt und steuert, wobei eine Steuerkette (6) mit einem einzigen elektromechanischen Wandlerelement (5) verbunden ist und das Wandlerelement (5) mit einem elektrischen Wechselstrom versorgt,

**dadurch gekennzeichnet, dass** die Zähne (14) so dimensioniert sind, dass jedes elektromechanische Wandlerelement (5) im Sättigungsbogen einer Kurve der Veränderung der magnetischen Induktion des die Zähne (14) bildenden ferromagnetischen Materials arbeitet, wodurch es mindestens zweien der elektromechanischen Wandlerelemente (5) möglich ist, einen Ausfall eines anderen elektromechanischen Wandlerelements (5) vom Kurzschlusstyp zu kompensieren, wobei eines der beiden elektromechanischen Wandlerelemente (5) den größten Teil oder sogar das gesamte Kurzschlussdrehmoment des ausgefallenen elektromechanischen Wandlerelements (5) kompensiert, während das andere der beiden elektromechanischen Wandlerelemente (5) das für den Betrieb des elektromechanischen Stellglieds (1) erforderliche Nenndrehmoment liefert.

2. Elektromechanisches Stellglied (1) nach Anspruch 1, **dadurch gekennzeichnet, dass** jeder Stator (10) ein Statorjoch (18) umfasst und in dem Fall, dass jedes Statorjoch (18) aus gestapelten gewalzten Blechen hergestellt ist, die Breite $l_d$ der Zähne (14) und die Höhe $h_{cs}$ des Statorjochs (18) durch die folgenden Formeln definiert sind:

$$l_d = \frac{B_g . T_d}{B_{max} . K_{fe}}$$

und

$$h_{cs} = \frac{\Phi_g}{B_{max} . L_{st} . K_{st}},$$

wobei $T_d$ eine axiale Länge eines Zahns (14), $B_g$ die Luftspaltinduktion im Nennbetrieb, $K_{fe}$ ein Ausdehnungskoeffizient, $B_{max}$ ein Maximalwert der Induktion, $\Phi_g$ ein Luftspaltfluß an einem Pol (24, 25) im Nennbetrieb, $L_{st}$ eine axiale Länge des elektromechanischen Wandlerelements (5) und $K_{st}$ ein Walzblechkoeffizient ist.

3. Elektromechanisches Stellglied (1) nach einem der Ansprüche 1 bis 2,
**dadurch gekennzeichnet, dass** jede Wicklung (12) einlagig ist und dass die an einen von einer Wicklung (12) umgebenen Zahn (14) angrenzenden Zähne (14) nicht von einer Wicklung umgeben sind.

4. Elektromechanisches Stellglied (1) nach einem der Ansprüche 1 bis 3,
**dadurch gekennzeichnet, dass** jedes elektromechanische Wandlerelement (5) ein Wandlerelement mit Magnetflusskonzentration ist.

5. Elektromechanisches Stellglied (1) nach einem der Ansprüche 1 bis 4,
**dadurch gekennzeichnet, dass** jede Steuerkette (6) ein elektromechanisches Wandlerelement (5) mit einem mehrphasigen elektrischen Strom versorgt, jede Wicklung (12) konzentrisch ist, wobei jeder Zahn (14) von einer Wicklung (12) umgeben ist, in der eine einzige Phase des mehrphasigen elektrischen Stroms fließt.

6. Elektromechanisches Stellglied (1) nach einem der Ansprüche 1 bis 5,
**dadurch gekennzeichnet, dass** jede Steuerkette (6) ein elektromechanisches Wandlerelement (5) mit einem dreiphasigen elektrischen Wechselstrom versorgt, und dass zwei elektromechanische Wandlerelemente (5a, 5b) einen gemeinsamen Rotor (20) aufweisen, wobei der gemeinsame Rotor (20) mit den Statoren (10a, 10b) der beiden elektromechanischen Wandlerelemente (5a, 5b) zusammenwirkt, wobei die Statoren (10a, 10b) der beiden elektromechanischen Wandlerelemente (5a, 5b) so zusammengebaut sind, dass sie mit dem gemeinsamen Rotor (20) eine sechsphasige Architektur bilden.

7. Elektromechanisches Stellglied (1) nach einem der Ansprüche 1 bis 5,
**dadurch gekennzeichnet, dass** mindestens zwei elektromechanische Wandlerelemente (5) einen gemeinsamen Rotor (20) aufweisen, wobei der gemeinsame Rotor (20) mit den Statoren (10) der mindestens zwei elektromechanischen Wandlerelemente (5) zusammenwirkt.

8. Elektromechanisches Stellglied (1) nach einem der Ansprüche 6 bis 7,
**dadurch gekennzeichnet, dass** die mit dem gemeinsamen Rotor (20) zusammenwirkenden Statoren (10) durch eine nichtmagnetische radiale Trennung (11) magnetisch voneinander isoliert sind.

9. Elektromechanisches Stellglied (1) nach einem der Ansprüche 1 bis 8, **dadurch gekennzeichnet, dass** jeder Stator (10) von einem Rotor (20) durch einen Luftspalt von mehr als 1 mm getrennt ist.

10. Elektromechanisches Stellglied (1) nach Anspruch 9, **dadurch gekennzeichnet, dass** der Luftspalt zwischen 1 und 2 mm beträgt.

11. Elektromechanisches Stellglied (1) nach einem der Ansprüche 1 bis 10, **dadurch gekennzeichnet, dass** die Magnetpole (24, 25) eine Sinusform haben, so dass ein sinusförmiger Magnetfluss durch jedes elektromechanische Wandlerelement (5) fließt.

12. Elektromechanisches Stellglied (1) nach einem der Ansprüche 1 bis 11, **dadurch gekennzeichnet, dass** die erste Gesamtzahl $N_p$ von Paaren von Magnetpolen (24, 25) und die zweite Gesamtzahl $Nd$ von Zähnen (14) derart sind, dass $(4_n\text{-}3).N_p < N_d < (4n\text{-}1).N_p$, wobei $n$ eine positive ganze Zahl ist.

13. Elektrische Flugsteuerungsvorrichtung (50) mit:

   - mindestens einem elektromechanischen Stellglied (1),
   - mindestens einem hydraulischen Stellglied (4),
   - mindestens einem mechanischen Antriebsstrang (30), wobei jeder mechanische Antriebsstrang (30) es einem elektromechanischen Stellglied (1) ermöglicht, ein hydraulisches Stellglied (4) anzutreiben,

   **dadurch gekennzeichnet, dass** jedes elektromechanische Stellglied (1) einem der Ansprüche 1 bis 12 entspricht.

14. Elektrische Flugsteuerungsvorrichtung (50) nach Anspruch 13, **dadurch gekennzeichnet, dass** jeder mechanische Antriebsstrang (30) frei von Untersetzungsgliedern ist.

15. Elektrische Flugsteuerungsvorrichtung (50) nach einem der Ansprüche 13 bis 14, **dadurch gekennzeichnet, dass** jeder mechanische Antriebsstrang (30) ein Pleuelstangen-/Kurbelsystem ist, das eine Pleuelstange (31) und eine Kurbel (32) umfasst.

## Claims

1. Electromechanical actuator (1) for electrical flight controls of an aircraft, comprising:

   - a transmission shaft (3) provided with an axis of rotation (2),
   - at least three electromechanical conversion members (5) each provided with a stator (10) and a rotor (20) that is rigidly connected to said transmission shaft (3) and rotates about said axis of rotation (2), said stator (10) being provided with teeth (14) and windings (12), each winding (12) surrounding at least one tooth (14), said rotor (20) being provided with permanent magnets (23) each having a north magnetic pole (24) and a south magnetic pole (25),
   - at least three flight control chains (6), each flight control chain (6) supplying power to and controlling an electromechanical conversion member (5), a flight control chain (6) being connected to a single electromechanical conversion member (5) and supplying said conversion member (5) with an alternating electric current,

   **characterised in that** said teeth (14) are dimensioned so that each electromechanical conversion member (5) operates at the saturation bend of a curve of variation of the magnetic induction of the ferromagnetic material constituting said teeth (14), thus allowing at least two of said electromechanical conversion members (5) to mitigate a short-circuit-type failure of another electromechanical conversion member (5), one of said two electromechanical conversion members (5) compensating for the majority, or even all, of the short-circuit torque of said failed electromechanical conversion member (5), while the other of said two electromechanical conversion members (5) delivers the nominal torque necessary for the operation of said electromechanical actuator (1).

2. Electromechanical actuator (1) according to claim 1, **characterised in that**, each stator (10) comprising a stator yoke (18) and if each stator yoke (18) is made from stacked rolled sheets, the width $l_d$ of said teeth (14) and the height $h_{cs}$ of said stator yoke (18) are defined by the following formulas:

$$l_d = \frac{B_g \cdot T_d}{B_{max} \cdot K_{fe}} \text{ and } h_{cs} = \frac{\Phi_g}{B_{max} \cdot L_{st} \cdot K_{st}}$$

$T_d$ being an axial length of a tooth (14), $B_g$ being the air gap induction in nominal operation, $K_{fe}$ being a packing factor, $B_{max}$ being a maximum value of said induction, $\Phi_g$ being an air gap flux on a pole (24, 25) in nominal operation, $L_{st}$ being an axial length of said electromechanical conversion member (5) and $K_{st}$ being a stacking factor.

3. Electromechanical actuator (1) according to either claim 1 or claim 2, **characterised in that** each winding (12) is single layer, said teeth (14) that are adjacent to a tooth (14) surrounded by a winding (12) not being surrounded by a winding.

4. Electromechanical actuator (1) according to any of claims 1 to 3, **characterised in that** each electromechanical conversion member (5) is a magnetic-flux-concentrating member.

5. Electromechanical actuator (1) according to any of claims 1 to 4, **characterised in that**, each flight control chain (6) supplying an electromechanical conversion member (5) with a polyphase electric current, each winding (12) is concentric, each tooth (14) being surrounded by a winding (12) in which a single phase of said polyphase electric current flows.

6. Electromechanical actuator (1) according to any of claims 1 to 5, **characterised in that**, each flight control chain (6) supplying an electromechanical conversion member (5) with a three-phase alternating electric current, two electromechanical conversion members (5a, 5b) comprise a common rotor (20), said common rotor (20) cooperating with the stators (10a, 10b) of said two electromechanical conversion members (5a, 5b), said stators (10a, 10b) of said two electromechanical conversion members (5a, 5b) being assembled to form, together with said common rotor (20), a six-phase architecture.

7. Electromechanical actuator (1) according to any of claims 1 to 5, **characterised in that** at least two electromechanical conversion members (5) comprise a common rotor (20), said common rotor (20) cooperating with said stators (10) of said at least two electromechanical conversion members (5).

8. Electromechanical actuator (1) according to either claim 6 or claim 7, **characterised in that** said stators (10) cooperating with said common rotor (20) are magnetically isolated from each other by a non-magnetic radial separation (11).

9. Electromechanical actuator (1) according to any of claims 1 to 8, **characterised in that** each stator (10) is separated from a rotor (20) by an air gap greater than 1 mm.

10. Electromechanical actuator (1) according to claim 9, **characterised in that** the said air gap is between 1 and 2 mm.

11. Electromechanical actuator (1) according to any of claims 1 to 10, **characterised in that** said magnetic poles (24, 25) have a sinusoidal shape so that a sinusoidal magnetic flux flows in each electromechanical conversion member (5).

12. Electromechanical actuator (1) according to any of claims 1 to 11, **characterised in that** the first total number $N_p$ of pairs of magnetic poles (24, 25) and the second total number $Nd$ of said teeth (14) are such that $(4n - 3).N_p < N_d < (4n - 1).N_p$, $n$ being a positive integer.

13. Electrical flight control device (50) comprising:

- at least one electromechanical actuator (1),
- at least one hydraulic actuator (4),
- at least one mechanical transmission chain (30), each mechanical transmission chain (30) allowing an electromechanical actuator (1) to control a hydraulic actuator (4),

**characterised in that** each electromechanical actuator (1) is according to any of claims 1 to 12.

**14.** Electrical flight control device (50) according to claim 13, **characterised in that** each mechanical transmission chain (30) does not comprise a speed reduction member.

**15.** Electrical flight control device (50) according to either claim 13 or claim 14, **characterised in that** each mechanical transmission chain (30) is a connecting-rod-crank system comprising a connecting rod (31) and a crank (32).

Fig.1

Fig.2

Fig.6

**Fig.3**

$P_d$

$h_{cs}$

5

12

14

10

14

18

25

23

20

12

N S

S

14

N

S

24

23

23

14

14

25

23

23

S

**Fig.4**

5a;5b

5a;5b

10a;10b

10a;10b

2

3

20

20

**Fig.5**

11

5a;10a

5b;10b

11

11

5b;10b

5a;10a

11

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1149195
- EP 2543589 A
- WO 2014056773 A
- EP 2378634 A
- US 20150054380 A

- DE 102013112525
- US 20050052080 A
- WO 2009082808 A
- US 20110290581 A
- FR 2493059

**Littérature non-brevet citée dans la description**

- **J.R HENDERSHOT.** *Design for Brushless Permanent Magnet Motors,* Janvier 1994